# EUROPEAN PATENT APPLICATION

(11) **EP 4 329 270 A1**
(43) Date of publication of application: **28.02.2024**
(21) Application number: 23191657.8
(22) Date of filing: 16.08.2023
(51) Int. Cl.: H04L 67/52, H04L 41/0806

(54) **INFORMATION PROVIDING APPARATUS, INFORMATION PROVIDING PROGRAM, EQUIPMENT REGISTRATION SYSTEM, AND EQUIPMENT REGISTRATION METHOD**

(30) Priority: 26.08.2022 JP 2022135248
(71) Applicant: Yokogawa Electric Corporation, Tokyo 180-8750 (JP)
(72) Inventor: URABE, Hiroo, Musashino-shi, Tokyo, 180-8750 (JP); YOSHIDA, Yusaku, Musashino-shi, Tokyo, 180-8750 (JP)
(74) Representative: Winter, Brandl - Partnerschaft mbB

(57) **Abstract**

A provisioning server (10) acquires identification information of a device (40) associated with transmission destination information indicating a location of a destination to which data is transmitted from the device (40), receives an inquiry about transmission destination information from the device (40), and notifies the device (40), which is a request source of the inquiry, of the transmission destination information associated with the identification information of the device (40), which is the request source of the inquiry.

## Description

### FIELD

The present invention relates to an information providing apparatus, an information providing program, an equipment registration system, and an equipment registration method.

### BACKGROUND

In the related art, a technique using a cloud environment is known which collects data from various devices such as gateway equipment, sensor equipment, and control equipment installed in a plant or the like.

Patent Literature 1: JP 6421220 B2

However, in the conventional technique, it is difficult to easily perform communication setting of equipment (device) in construction of a data collection system using a cloud environment. This is because the conventional technique requires to perform individual setting for each hierarchy of communication connection of the cloud environment, the gateway equipment, the sensor equipment, and the like and imposes heavy burden on engineering.

The present invention has been made in consideration of the above situation, and aims to easily perform communication setting of a device.

### SUMMARY

According to an aspect of the embodiments, an information providing apparatus includes, an acquisition unit configured to acquire identification information of a device associated with transmission destination information indicating a location of a destination to which data is transmitted from the device, a reception unit configured to receive an inquiry about the transmission destination information from the device, and a notification unit configured to notify the device, which is a request source of the inquiry, of the transmission destination information associated with the identification information of the device, which is the request source of the inquiry.

According to an aspect of the embodiments, an information providing program that causes a computer to execute a process, the process includes, acquiring identification information of a device associated with transmission destination information indicating a location of a destination to which data is transmitted from the device, receiving an inquiry about the transmission destination information from the device, and notifying the device, which is a request source of the inquiry, of the transmission destination information associated with the identification information of the device, which is the request source of the inquiry.

According to an aspect of the embodiments, an equipment registration system includes, an information management apparatus configured to execute designated processing on data received from a device; and an information providing apparatus, wherein the information management apparatus includes a transmitter configured to transmit, to the information providing apparatus, transmission destination information indicating a transmission destination of the data and identification information of the device associated with the transmission destination information, and the information providing apparatus includes, an acquisition unit configured to acquire the transmission destination information and the identification information from the information management apparatus, a reception unit configured to receive an inquiry about the transmission destination information from the device, and a notification unit configured to notify the device, which is a request source of the inquiry, of the transmission destination information associated with the identification information of the device, which is the request source of the inquiry.

According to an aspect of the embodiments, an equipment registration method executed by an equipment registration system including an information management apparatus configured to execute designated processing on data received from a device and an information providing apparatus, the equipment registration method includes, by the information management apparatus, executing processing of transmitting, to the information providing apparatus, transmission destination information indicating a transmission destination of the data and identification information of the device associated with the transmission destination information, and by the information providing apparatus, executing processing of acquiring the identification information from the information management apparatus, receiving an inquiry about the transmission destination information from the device, and notifying the device, which is a request source of the inquiry, of the transmission destination information associated with the identification information of the device, which is the request source of the inquiry.

### BRIEF DESCRIPTION OF THE DRAWINGS

FIG. 1 is a diagram illustrating a configuration example of an equipment registration system according to an embodiment;
FIG. 2 is a diagram describing an equipment registration system of a reference technique;
FIG. 3 is a block diagram illustrating a configuration example of each apparatus according to the embodiment;
FIG. 4 is a diagram illustrating an example of an equipment information storage unit of a provisioning server according to the embodiment;
FIG. 5 is a diagram illustrating an example of an equipment information storage unit of an application server according to the embodiment;
FIG. 6 is a diagram illustrating an example of a plant information storage unit of the application server according to the embodiment;
FIG. 7 is a sequence diagram illustrating an example of a flow of equipment registration processing according to the embodiment; and
FIG. 8 is a diagram describing a hardware configuration example.

### DESCRIPTION OF EMBODIMENTS

In the following, an information providing apparatus, an information providing program, an equipment registration system, and an equipment registration method according to an embodiment of the present invention will be described in detail with reference to the drawings. Note that the present invention is not limited by the embodiment described below.

### Embodiment

In the following, a configuration of an equipment registration system 100, a configuration of each apparatus, and a flow of processing according to the embodiment will be described in order, and finally, effects of the embodiment will be described.

### 1. Configuration of Equipment Registration System 100

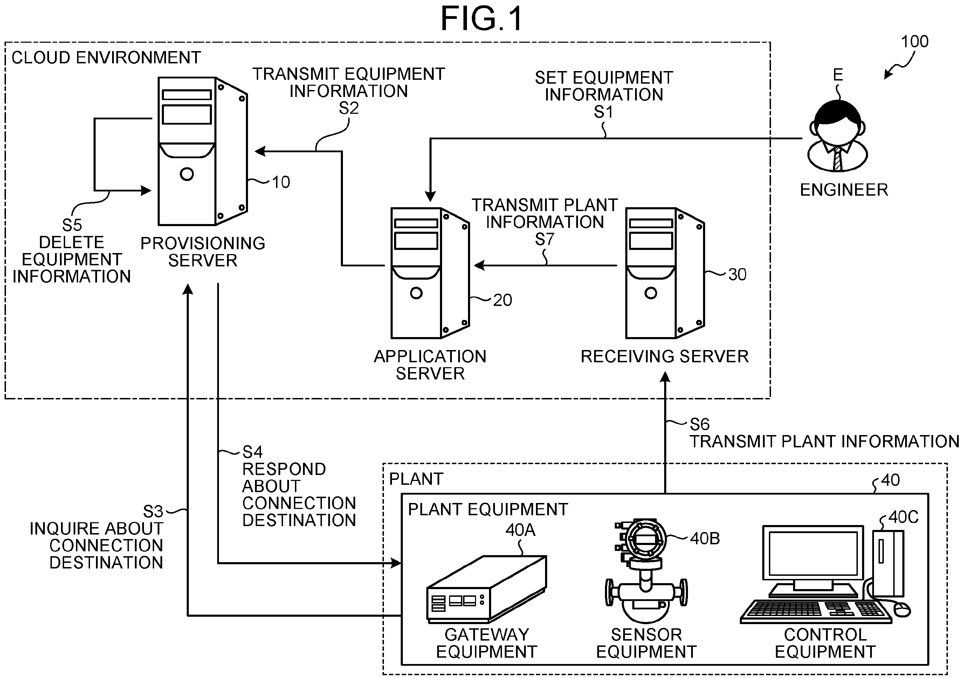

A configuration of an equipment registration system 100 according to the embodiment will be described in detail with reference to FIG. 1. FIG. 1 is a diagram illustrating a configuration example of the equipment registration system 100 according to the embodiment. In the following, a configuration example of the entire equipment registration system 100, processing of the equipment registration system 100, and problems of an equipment registration system 100P of the reference technique will be described in order, and finally, effects of the equipment registration system 100 will be described. Note that the embodiment describes, as an example, factory production remote monitoring using plant equipment which is a device installed in a plant, but does not limit the device and the utilization field, and can be applied to environmental measurement remote monitoring such as electric power monitoring, wind power generation, water and sewage monitoring, and river monitoring.

### 1-1. Configuration Example of Entire Equipment Registration System 100

The equipment registration system 100 includes a provisioning server 10 which is an information providing apparatus, an application server 20 which is an information management apparatus, a receiving server 30 which is an information collection apparatus, and plant equipment 40 (gateway equipment 40A, sensor equipment 40B, and control equipment 40C). The provisioning server 10, the application server 20, and the receiving server 30 are built in a cloud environment. The plant equipment 40 is installed in the plant.

The equipment registration system 100 illustrated in FIG. 1 may include a plurality of provisioning servers 10, a plurality of application servers 20, or a plurality of receiving servers 30. The application server 20 may be integrated with the receiving server 30.

### 1-2. Processing of Entire Equipment Registration System 100

The processing of the entire equipment registration system 100 as described above will be described. Note that the following steps S1 to S7 can also be performed in a different order. Some of the following steps S1 to S7 may be omitted.

### 1-2-1. Equipment Information Setting Processing

An engineer E who is an administrator of the equipment registration system 100 sets equipment information in the application server 20 (step S1). For example, the engineer E performs the setting of the gateway equipment 40A, the sensor equipment 40B, the control equipment 40C, and the like on the network map that performs the logical configuration of the network. At this point, in the application server 20, identification information of the plant equipment 40 such as a hardware identification number, location information of the plant equipment 40 such as a global Internet Protocol (IP) address or a telephone number of a cellular line, application information regarding an application using the plant information collected by the plant equipment 40, and the like are registered as the equipment information. Further, in the application server 20, transmission destination information regarding the receiving server 30 of a transmission destination to which each device transmits is also registered.

### 1-2-2. Equipment Information Registration Processing

The application server 20 transmits the equipment information and the transmission destination information to the provisioning server 10 (step S2). At this point, in the provisioning server 10, identification information of the plant equipment 40, location information of the plant equipment 40, and the like are registered as the equipment information.

### 1-2-3. Connection Destination Inquiry Processing

The plant equipment 40 transmits an inquiry about a communication connection destination (information transmission destination) of the plant equipment 40 to the provisioning server 10 (step S3). At this point, the plant equipment 40 transmits identification information of the plant equipment 40 to the provisioning server 10 together with the inquiry about the communication connection destination. The plant equipment 40 is connected based on the location information of the provisioning server 10 incorporated in the parameter of the storage area of the plant equipment 40 at the time of factory shipment, and requests, from the provisioning server 10, transmission destination information which is the location information of the receiving server 30 which is a communication connection destination. For example, when a power is turned on, the plant equipment 40 is connected to the provisioning server 10 based on a global IP address or a uniform resource locator (URL) stored in the storage area, and requests transmission destination information of the receiving server 30.

### 1-2-4. Connection Destination Response Processing

The provisioning server 10 transmits the response of the communication connection destination of the plant equipment 40 to the plant equipment 40 (step S4). At this point, the provisioning server 10 permits the connection of the plant equipment 40 using the equipment information as a white list, and transmits transmission destination information, which is location information of the receiving server 30, such as a global IP address or a URL to the permitted plant equipment 40. In other words, the provisioning server 10 determines whether or not the identification information acquired from the plant equipment 40 in step S3 described above is included in the equipment information. The provisioning server 10 permits the connection if the identification information is included in the equipment information, and does not permit the connection if the identification information is not included in the equipment information.

### 1-2-5. Equipment Information Deletion Processing

The provisioning server 10 deletes the equipment information of the plant equipment 40 (step S5). At this point, the provisioning server 10 deletes the equipment information of the plant equipment 40 to which the transmission destination information has been transmitted. The provisioning server 10 deletes the equipment information for which a predetermined period of time has elapsed since the acquisition of the equipment information in step S2 described above.

### 1-2-6. Plant Information Collection Processing

The plant equipment 40 transmits the plant information to the receiving server 30 of the communication connection destination (information transmission destination) (step S6). At this point, the plant equipment 40 changes the connection destination from the provisioning server 10 to the receiving server 30, and periodically transmits plant information such as measurement data and control data acquired from the plant to the receiving server 30.

### 1-2-7. Plant Information Registration Processing

The receiving server 30 transmits the received plant information to the application server 20 (step S7). The plant information received in the application server 20 is operated by an application on the application server 20.

### 1-3. Equipment Registration System 100P

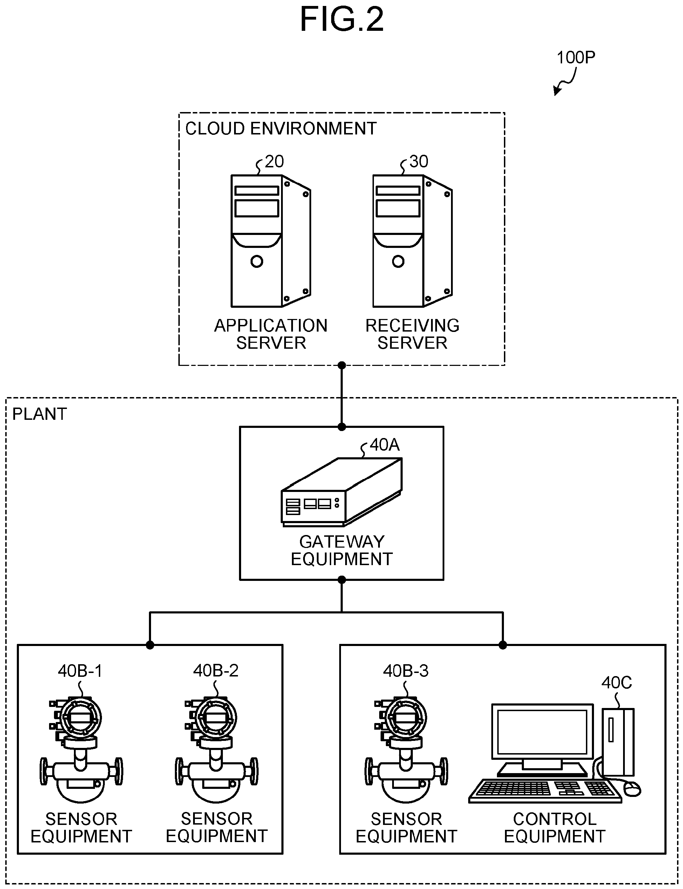

An overview of equipment registration processing as a reference technique will be described with reference to FIG. 2, and then problems of the reference technique will be described. FIG. 2 is a diagram describing an equipment registration system according to a reference technique.

### 1-3-1. Overview of Equipment Registration Processing of Reference Technique

As illustrated in FIG. 2, the equipment registration system 100P includes an application server 20, a receiving server 30, and plant equipment 40 (gateway equipment 40A, sensor equipment 40B, and control equipment 40C). The application server 20 and the receiving server 30 are built in a cloud environment. The plant equipment 40 is installed in the plant. In the following, equipment registration processing 1 and equipment registration processing 2 according to the equipment registration system 100P will be described.

### 1-3-1-1. Equipment Registration Processing 1

In the equipment registration processing 1, due to engineering at the site, settings related to communication, such as a setting of a cloud environment, a setting of the gateway equipment 40A which is communication equipment, and a setting of the sensor equipment 40B and the control equipment 40C which are connected to the gateway equipment 40A, are required for each hierarchy of connection. In the equipment registration processing 1, it is necessary to confirm consistency on the system between the respective hierarchies with respect to the setting for each hierarchy. In other words, in the equipment registration processing 1, communication setting for performing communication on the upper-level side from the gateway equipment 40A is performed. In the equipment registration processing 1, the setting of a device to which the gateway equipment 40A is connected is performed on the upper-level side. At this point, in the equipment registration processing 1, the setting is performed by priority connection to the gateway equipment 40A, the sensor equipment 40B, or the like, or by local wireless connection.

### 1-3-1-2. Equipment Registration Processing 2

In the equipment registration processing 2, in a case where the setting by engineering is not performed, a method of setting at the time of shipment in a factory can also be performed. At this point, in the equipment registration processing 2, it is also possible to simplify the input of the setting of the gateway equipment 40A or the cloud environment by using a QR code (registered trademark) or the like given to the sensor equipment 40B or the gateway equipment 40A.

### 1-3-2. Problems of Equipment Registration Processing of Reference Technique

In the following, as problems of the equipment registration processing of the reference technique, a problem 1 in a case (equipment registration processing 1) where engineering is performed at the site and a problem 2 in a case (equipment registration processing 2) where setting is completed at the time of shipment will be described.

### 1-3-2-1. Problem 1

In the equipment registration system 100P, when engineering is performed at the site, the following problems arise. First, since an individual setting is required for each hierarchy of communication connection, knowledge about communication setting of work at the site is required, and knowledge about communication or cloud environment of engineering at the site is required, the number of persons who can perform engineering is limited. Second, the setting of a device for each hierarchy is required, and when the number of connected pieces of equipment increases, enormous engineering man-hours are required at sites such as the cloud environment, the gateway equipment 40A, and the sensor equipment 40B. Third, it is necessary to confirm the consistency of the information set for each hierarchy as a whole, and a large number of man-hours are required for the confirmation work. It is necessary to make the settings of the connection source and the connection destination consistent. Fourth, when the number of devices increases, management becomes complicated, erroneous input also increases, and man-hours for rework are required. Fifth, since individual settings are performed, time and effort are required to perform individual settings even when a plurality of similar settings is performed.

### 1-3-2-2. Problem 2

In the equipment registration system 100P, when engineering is not performed at the site or when setting is completed at the time of shipment, the following problems arise. In other words, when engineering at the site is not used, there are problems in that shipping is not possible unless a customer determines how to use the setting works of the URL of the cloud environment or the gateway equipment 40A, the delivery time is long, the production process is complicated, and the like.

### 1-4. Effects of Equipment Registration System 100

In the following, an overview of the equipment registration system 100 according to the embodiment will be described, and then effects of the equipment registration system 100 will be described.

### 1-4-1. Overview of Equipment Registration System 100

In the equipment registration system 100, the provisioning server 10 acquires equipment information in which identification information of the plant equipment 40 is associated with transmission destination information indicating the location of the receiving server 30 to which the plant equipment 40 transmits data, receives an inquiry about the transmission destination information from the plant equipment 40, and notifies the plant equipment 40, which is a request source of the inquiry, of the transmission destination information associated with the identification information of the plant equipment 40 which is the request source of the inquiry based on the equipment information.

The provisioning server 10 acquires equipment information from each of a plurality of the application servers 20 that holds equipment information with regard to plant equipment which is a collection target of plant information such as a sensor value. The provisioning server 10 receives an inquiry based on location information for specifying a request destination of the inquiry, which is set in a shipment stage before plant equipment 40 is installed in the plant. The provisioning server 10 determines whether or not the identification information of the plant equipment 40 which is the request source of the inquiry is registered in the equipment information, notifies the plant equipment 40 of the transmission destination information if the identification information is registered, and outputs a warning indicating that the identification information is not registered yet if the identification information is not registered. Further, the provisioning server 10 stores the acquired equipment information, and deletes, from among the stored equipment information, the equipment information of the plant equipment 40 for which the transmission destination information has been notified or the equipment information for which a predetermined time has elapsed after the acquisition.

As described above, the equipment registration system 100 can simplify the engineering work related to the equipment setting at the site and manage the consistency of the entire system in a unitary manner. The equipment registration system 100 can be connected to a specific cloud by only turning on the power without setting a shipped device at the site.

### 1-4-2. Effects of Equipment Registration System 100

The equipment registration system 100 has the following effects. First, since information set by a cloud application is reflected in a lower-level system, the setting information is managed in a unitary manner, and consistency is not lost. Second, since setting work at the site is not required, engineering can be greatly reduced. Third, since engineering work such as writing setting information in the hardware at the site does not occur, installation at the site can be performed without requiring the engineer E to have advanced knowledge of communication setting or the like. Fourth, since the application is managed, the setting can be copied, and the input load of the engineer E can be reduced. Fifth, since the setting data of the provisioning server 10 is deleted after use, the equipment information is managed only by the application server 20 in a unitary manner. As described above, the equipment registration system 100 can easily perform the communication setting of a device.

### 2. Configuration of Each Apparatus of Equipment Registration System 100

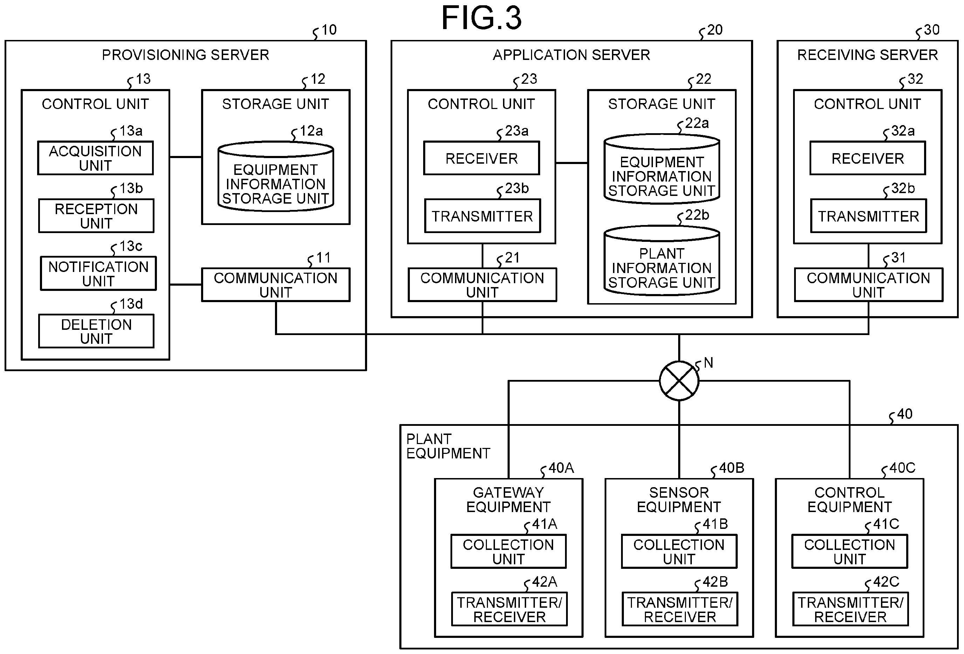

A functional configuration of each apparatus included in the equipment registration system 100 illustrated in FIG. 1 will be described with reference to FIG. 3. FIG. 3 is a block diagram illustrating a configuration example of each apparatus according to the embodiment. In the following, a configuration example of the entire equipment registration system 100 according to the embodiment will be described, and then configuration examples of the provisioning server 10, the application server 20, the receiving server 30, and the plant equipment 40 according to the embodiment will be described in detail.

### 2-1. Configuration Example of Entire Equipment Registration System 100

As illustrated in FIG. 3, the equipment registration system 100 includes the provisioning server 10, the application server 20, the receiving server 30, and the plant equipment 40. The provisioning server 10, the application server 20, and the receiving server 30 are communicably connected by a predetermined communication network in a cloud environment. The plant equipment 40 has a communication function that enables communication by a communication network N such as a mobile phone network.

Note that the provisioning server 10, the application server 20, and the receiving server 30 are not limited to server apparatuses built in a cloud environment, and may be a physical server, a virtual machine, a container, or the like.

### 2-2. Configuration Example of Provisioning Server 10

First, a configuration example of the provisioning server 10 which is an information providing apparatus will be described with reference to FIG. 3. The provisioning server 10 includes a communication unit 11, a storage unit 12, and a control unit 13. Note that the provisioning server 10 may include an input unit (e.g., a keyboard, a mouse, or the like) for receiving various operations from the engineer E who is an administrator of the equipment registration system 100, or a display unit (e.g., a liquid crystal display or the like) for displaying various kinds of information.

### 2-2-1. Communication Unit 11

The communication unit 11 performs data communication with other apparatuses. For example, the communication unit 11 performs data communication with each communication apparatus via a router or the like. The communication unit 11 can perform data communication with a terminal of an operator not illustrated.

### 2-2-2. Storage Unit 12

The storage unit 12 stores various kinds of information referred to when the control unit 13 operates or various kinds of information acquired when the control unit 13 operates. The storage unit 12 includes an equipment information storage unit 12a. The storage unit 12 may be implemented by, for example, a semiconductor memory device such as a random access memory (RAM) or a flash memory, or a storage apparatus such as a hard disk or an optical disk. Note that in the example of FIG. 3, the storage unit 12 is installed inside the provisioning server 10, but may be installed outside the provisioning server 10, or a plurality of storage units may be installed.

### 2-2-2-1. Equipment Information Storage Unit 12a

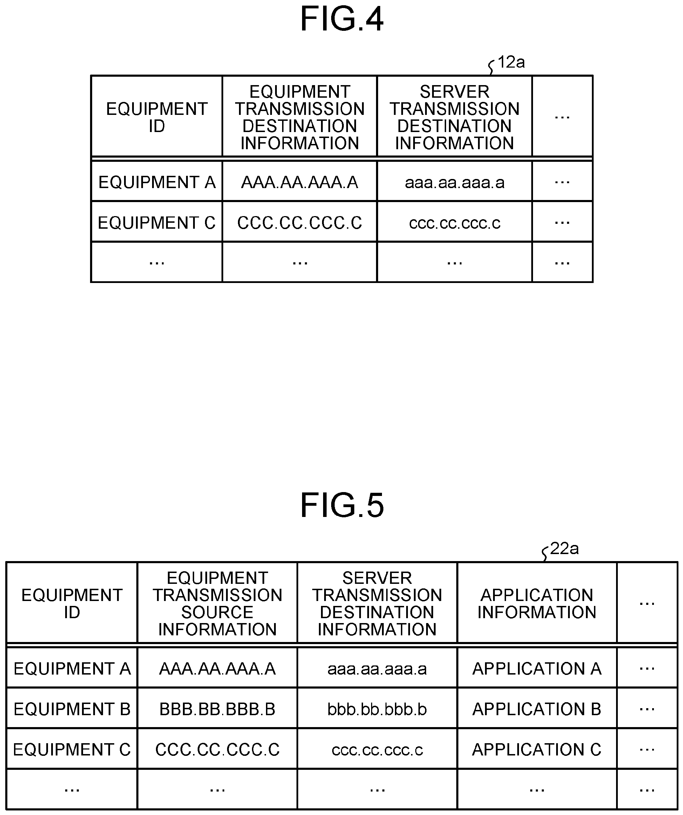

The equipment information storage unit 12a stores equipment information and transmission destination information transmitted from the application server 20. An example of information stored by the equipment information storage unit 12a will be described with reference to FIG. 4. FIG. 4 is a diagram illustrating an example of the equipment information storage unit 12a of the provisioning server 10 according to the embodiment. In the example of FIG. 4, the equipment information storage unit 12a includes items such as "equipment IDs", "equipment transmission destination information", and "server transmission destination information".

The "equipment ID" indicates identification information for identifying the plant equipment 40, and is, for example, an identification number of the plant equipment 40. The "equipment transmission destination information" indicates location information for specifying the location of the plant equipment 40 in the communication connection, and is, for example, a global IP address, a telephone number of a cellular line, or the like of the plant equipment 40. The "server transmission destination information" indicates location information for specifying the location of the receiving server 30 in the communication connection, and is, for example, a global IP address, a URL, or the like of the receiving server 30.

In other words, FIG. 4 illustrates an example in which the equipment transmission destination information is "AAA.AA.AAA.A" and the server transmission destination information is "aaa.aa.aaa.a", with respect to the plant equipment 40 identified by the equipment ID "equipment A", and the equipment transmission destination information is "CCC.CC.CCC.C" and the server transmission destination information is "ccc.cc.ccc.c", with respect to the plant equipment 40 identified by the equipment ID "equipment C". Note that the equipment information stored in the equipment information storage unit 12a is appropriately deleted by a deletion unit 13d of the control unit 13 to be described later.

### 2-2-3. Control Unit 13

The control unit 13 controls the entire provisioning server 10. The control unit 13 includes an acquisition unit 13a, a reception unit 13b, a notification unit 13c, and a deletion unit 13d. The control unit 13 may be implemented by, for example, an electronic circuit such as a central processing unit (CPU) or a micro processing unit (MPU), or an integrated circuit such as an application specific integrated circuit (ASIC) or a field programmable gate array (FPGA).

### 2-2-3-1. Acquisition Unit 13a

The acquisition unit 13a acquires identification information of a device associated with transmission destination information indicating locations of destinations to which data is transmitted from the device. For example, the acquisition unit 13a acquires the equipment information in which the identification information of each of a plurality of devices is associated with the transmission destination information indicating the transmission destination of the plant information of each of the plurality of devices. The acquisition unit 13a acquires identification information regarding a device that is a request source of inquiry and transmission destination information associated with the identification information, which are transmitted from the application server 20. At this point, the acquisition unit 13a can also inquire of the application server 20 and acquire the identification information regarding the device that is the request source of the inquiry and the transmission destination information associated with the identification information. The acquisition unit 13a acquires, from each of the plurality of application servers 20, identification information regarding the device that acquires plant information to be collected by each application server 20. The device is, for example, the plant equipment 40 that includes a communication apparatus and a sensor installed in the plant and transmits plant information (e.g., a sensor value) acquired from the plant to a destination indicated by the notified transmission destination information. The equipment information is, for example, information including identification information of the plant equipment 40 such as a hardware identification number, transmission destination information which is location information of the plant equipment 40 such as a global IP address or a telephone number of a cellular line, transmission information which is location information of the receiving server 30 which is a data transmission destination of the plant equipment 40, and the like.

A specific example will be described. The acquisition unit 13a acquires, as the equipment information of the gateway equipment 40A transmitted from the application server 20, the hardware identification number "equipment A", the global IP address "AAA.AA.AAA.A" of the gateway equipment 40A, and the global IP address "aaa.aa.aaa.a" of the receiving server 30. Note that the acquisition unit 13a stores the acquired equipment information in the equipment information storage unit 12a.

### 2-2-3-2. Reception Unit 13b

The reception unit 13b receives, from a device, an inquiry about transmission destination information indicating a location of a destination to which the device transmits data. For example, the reception unit 13b receives an inquiry about transmission destination information from a device such as the plant equipment 40 in which the power is turned on and first activation is performed. The first activation is activation when the device is powered on for the first time after shipment, or activation when the device is powered on for the first time after initialization. The reception unit 13b receives an inquiry from the device in which the apparatus (provisioning server 10) in which the reception unit is included is set as a request destination of the inquiry at a shipment stage of the device which is a request source of the inquiry.

A specific example will be described. The reception unit 13b receives an inquiry about the transmission destination information of the receiving server 30 based on the global IP address "XXX.XX.XXX.X" of the provisioning server 10, which is set at a shipment stage before the plant equipment 40 in which the power is turned on and first activation is performed is installed in the plant.

### 2-2-3-3. Notification Unit 13c

The notification unit 13c notifies a device, which is a request source of the inquiry, of the transmission destination information associated with the identification information of the device that is the request source of the inquiry. For example, the notification unit 13c notifies the device, such as the plant equipment 40 at the time of first activation, of the transmission destination information. At this point, the notification unit 13c determines whether or not the identification information of the device that is a request source of the inquiry is registered in the identification information acquired from the application server 20, notifies the device of the transmission destination information if the identification information is registered, and outputs, to the device, information indicating that the identification information is not registered yet if the identification information is not registered.

A specific example will be described. If the notification unit 13c receives an inquiry from the gateway equipment 40A (identification number "equipment A"), the notification unit refers to the equipment information storage unit 12a, and since the identification number "equipment A" is registered, the notification unit transmits the global IP address "aaa.aa.aaa.a" of the receiving server 30 to the gateway equipment 40A. On the other hand, if the notification unit receives an inquiry from the sensor equipment 40B (identification number "equipment B"), the notification unit refers to the equipment information storage unit 12a, and since the identification number "equipment B" is not registered, the notification unit transmits a warning indicating that the identification number is not registered yet to the sensor equipment 40B.

### 2-2-3-4. Deletion Unit 13d

The deletion unit 13d deletes, from among the identification information stored in the equipment information storage unit 12a, the identification information of the device for which the transmission destination information has been notified, or the identification information for which a predetermined time has elapsed since the acquisition from the application server 20 by the acquisition unit 13a.

A specific example will be described. If the deletion unit 13d receives an inquiry from the gateway equipment 40A and transmits the global IP address "aaa.aa.aaa.a" of the receiving server 30 to the gateway equipment 40A, the deletion unit deletes the identification number "equipment A" of the gateway equipment 40A, the global IP address "AAA.AA.AAA.A" of the gateway equipment 40A, and the global IP address "aaa.aa.aaa.a" of the receiving server 30 from the equipment information storage unit 12a. If ten days have elapsed after the acquisition of the equipment information of the sensor equipment 40B from the application server 20, the deletion unit 13d deletes the identification number "equipment B" of the sensor equipment 40B, the global IP address "BBB.BB.BBB B" of the sensor equipment 40B, and the global IP address "bbb.bb.bbb.b" of the receiving server 30 from the equipment information storage unit 12a.

### 2-3. Configuration Example of Application Server 20

A configuration example of the application server 20 which is an information management apparatus will be described with reference to FIG. 3. The application server 20 includes a communication unit 21, a storage unit 22, and a control unit 23. Note that the application server 20 may include an input unit (e.g., a keyboard, a mouse, or the like) for receiving various operations from the engineer E who is an administrator of the equipment registration system 100, or a display unit (e.g., a liquid crystal display or the like) for displaying various kinds of information.

### 2-3-1. Communication Unit 21

The communication unit 21 performs data communication with other apparatuses. For example, the communication unit 21 performs data communication with each communication apparatus via a router or the like. The communication unit 21 can perform data communication with a terminal of an operator not illustrated.

### 2-3-2. Storage unit 22

The storage unit 22 stores various kinds of information referred to when the control unit 23 operates or various kinds of information acquired when the control unit 23 operates. The storage unit 22 includes an equipment information storage unit 22a and a plant information storage unit 22b. The storage unit 22 may be implemented by, for example, a semiconductor memory device such as a RAM or a flash memory, or a storage apparatus such as a hard disk or an optical disk. Note that in the example of FIG. 3, the storage unit 22 is installed inside the application server 20, but may be installed outside the application server 20, or a plurality of storage units may be installed.

### 2-3-2-1. Equipment Information Storage Unit 22a

The equipment information storage unit 22a stores equipment information set by the engineer E who is an administrator of the equipment registration system 100. An example of information stored by the equipment information storage unit 22a will be described with reference to FIG. 5. FIG. 5 is a diagram illustrating an example of the equipment information storage unit 22a of the application server 20 according to the embodiment. In the example of FIG. 5, the equipment information storage unit 22a includes items such as "equipment ID", "equipment transmission source information", "server transmission destination information", and "application information".

The "equipment ID" indicates identification information for identifying the plant equipment 40, and is, for example, an identification number of the plant equipment 40. The "equipment transmission source information" indicates location information for specifying the location of the plant equipment 40 in the communication connection, and is, for example, a global IP address, a telephone number of a cellular line, or the like of the plant equipment 40. The "server transmission destination information" indicates location information for specifying the location of the receiving server 30 in the communication connection, and is, for example, a global IP address, a URL, or the like of the receiving server 30. The "application information" is information for specifying an application that processes the plant information collected from the plant equipment 40.

In other words, FIG. 5 illustrates an example in which the equipment transmission source information is "AAA.AA.AAA.A", the server transmission destination information is "aaa.aa.aaa.a", and the application information is "application A", with respect to the plant equipment 40 identified by the equipment ID "equipment A", the equipment transmission source information is "BBB.BB.BBB.B", the server transmission destination information is "bbb.bb.bbb.b", and the application information is "application B", with respect to the plant equipment 40 identified by the equipment ID "equipment B", and the equipment transmission source information is "CCC.CC.CCC.C", the server transmission destination information is "ccc.cc.ccc.c", and the application information is "application C", with respect to the plant equipment 40 identified by the equipment ID "equipment C".

### 2-3-2-2. Plant Information Storage Unit 22b

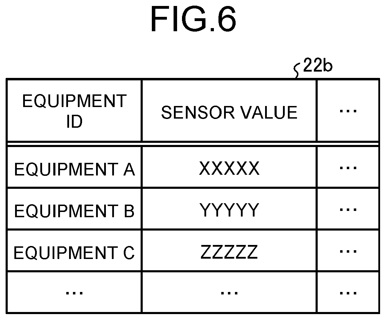

The plant information storage unit 22b stores identification information of the device and plant information collected by the plant equipment 40 and received via the receiving server 30. An example of information stored by the plant information storage unit 22b will be described with reference to FIG. 6. FIG. 6 is a diagram illustrating an example of the plant information storage unit 22b of the application server 20 according to the embodiment. In the example of FIG. 6, the plant information storage unit 22b includes items such as "equipment ID" and "sensor value".

The "equipment ID" indicates identification information for identifying the plant equipment 40, and is, for example, an identification number of the plant equipment 40. The "sensor value" represents plant information, and is measurement data, control data, or the like collected by the plant equipment 40 in the plant.

In other words, FIG. 6 illustrates an example in which the sensor value is "XXXXX" with respect to the plant equipment 40 identified by the equipment ID "equipment A", the sensor value is "YYYYY" with respect to the plant equipment 40 identified by the equipment ID "equipment B", and the sensor value is "ZZZZZ" with respect to the plant equipment 40 identified by the equipment ID "equipment C".

### 2-3-3. Control Unit 23

The control unit 23 controls the entire application server 20. The control unit 23 includes a receiver 23a and a transmitter 23b. The control unit 23 may be implemented by, for example, an electronic circuit such as a CPU or an MPU, or an integrated circuit such as an ASIC or an FPGA.

### 2-3-3-1. Receiver 23a

The receiver 23a receives identification information of a device. For example, the receiver 23a receives the identification information of the plant equipment 40 transmitted from the terminal apparatus of the engineer E. The receiver 23a receives the equipment information of the plant equipment 40 via a network map for logically configuring the network by the operation of the engineer E. At this point, the receiver 23a receives, as the equipment information, identification information of the plant equipment 40 such as a hardware identification number, location information of the plant equipment 40 such as a global IP address and a telephone number of a cellular line, application information regarding applications used by the plant equipment 40, and the like. Note that the transmission destination information is set by the application server 20 based on the setting of the engineer E.

A specific example will be described. The receiver 23a receives, as the equipment information of the gateway equipment 40A set by the operation of the engineer E, the hardware identification number "equipment A", the global IP address "AAA.AA.AAA.A" of the gateway equipment 40A, the global IP address "aaa.aa.aaa.a" of the receiving server 30, and the application information "application A". Note that the receiver 23a stores the received equipment information in the equipment information storage unit 22a.

The receiver 23a receives data collected by the device. For example, the receiver 23a receives the plant information transmitted by the receiving server 30. A specific example will be described. The receiver 23a receives, as the plant information, the sensor value "XXXXX" collected by the gateway equipment 40A, the sensor value "YYYYY" collected by the sensor equipment 40B, and the sensor value "ZZZZZ" collected by the control equipment 40C. Note that the receiver 23a stores the received plant information in the plant information storage unit 22b.

### 2-3-3-2. Transmitter 23b

The transmitter 23b transmits transmission destination information indicating a data transmission destination and identification information of a device associated with the transmission destination information to the information providing apparatus. For example, the transmitter 23b transmits, to the provisioning server 10, the equipment information in which the identification information of the plant equipment 40 is associated with the transmission destination information of the receiving server 30.

A specific example will be described. The transmitter 23b transmits, to the provisioning server 10, the hardware identification number "equipment A", the global IP address "AAA.AA.AAA.A" of the gateway equipment 40A, and the global IP address "aaa.aa.aaa.a" of the receiving server 30, as the equipment information of the gateway equipment 40A set by the operation of the engineer E.

The transmitter 23b notifies the device of an instruction to initialize the device by causing the device to delete the transmission destination information stored by the device. For example, after first activation, the transmitter 23b notifies the plant equipment 40 that stores the global IP address of the provisioning server 10 as the transmission destination information, of an initialization instruction, and causes the plant equipment 40 to delete the stored global IP address.

### 2-4. Configuration Example of Receiving Server 30

A configuration example of the receiving server 30 which is an information collection apparatus will be described with reference to FIG. 3. The receiving server 30 includes a communication unit 31 and a control unit 32. Note that the receiving server 30 may include an input unit (e.g., a keyboard, a mouse, or the like) for receiving various operations from the engineer E who is an administrator of the equipment registration system 100, or a display unit (e.g., a liquid crystal display or the like) for displaying various kinds of information.

### 2-4-1. Communication Unit 31

The communication unit 31 performs data communication with other apparatuses. For example, the communication unit 31 performs data communication with each communication apparatus via a router or the like. The communication unit 31 can perform data communication with a terminal of an operator not illustrated.

### 2-4-2. Control Unit 32

The control unit 32 controls the entire receiving server 30. The control unit 32 includes a receiver 32a and a transmitter 32b. The control unit 32 may be implemented by, for example, an electronic circuit such as a CPU or an MPU, or an integrated circuit such as an ASIC or an FPGA.

### 2-4-2-1. Receiver 31a

The receiver 31a receives data and identification information collected by a device. For example, the receiver 31a receives the plant information collected by the plant equipment 40. A specific example will be described. The receiver 31a receives, as the plant information, the sensor value "XXXXX" collected by the gateway equipment 40A, the sensor value "YYYYY" collected by the sensor equipment 40B, and the sensor value "ZZZZZ" collected by the control equipment 40C. Note that the receiver 31a may store the received plant information in a storage unit not illustrated.

### 2-4-2-2. Transmitter 31b

The transmitter 31b transmits data collected by a device. For example, the transmitter 3 1b transmits the plant information and identification information collected by the plant equipment 40 to the application server 20. A specific example will be described. The transmitter 3 1b transmits, to the application server 20, the sensor value "XXXXX" collected by the gateway equipment 40A, the sensor value "YYYYY" collected by the sensor equipment 40B, and the sensor value "ZZZZZ" collected by the control equipment 40C, as the plant information.

### 2-5. Configuration Example of Plant Equipment 40

A configuration example of the plant equipment 40 will be described with reference to FIG. 3. For example, the plant equipment 40 is constituted of gateway equipment 40A which is communication equipment, sensor equipment 40B which is measurement equipment, control equipment 40C which controls the plant equipment, and the like. The plant equipment 40 (40A, 40B, and 40C) includes a collection unit 41 (41A, 41B, and 41C) and a transmitter/receiver 42 (42A, 42B, and 42C).

### 2-5-1. Collection Unit 41

The collection unit 41 collects data. For example, the collection unit 41 collects plant information that is data in the plant.

### 2-5-2. Transmitter/Receiver 42

The transmitter/receiver 42 transmits data. For example, the transmitter/receiver 42 transmits the plant information collected by the collection unit 41 to the receiving server 30. The transmitter/receiver 42 transmits an inquiry about transmission destination information indicating the location of a destination to which a device transmits data. For example, when the power is turned on and first activation is performed, the transmitter/receiver 42 refers to the global IP address of the provisioning server 10 that specifies the request destination of the inquiry set at a shipment stage, and transmits the inquiry about the global IP address of the receiving server 30 to the specified provisioning server 10.

The transmitter/receiver 42 receives data. For example, the transmitter/receiver 42 receives the global IP address of the receiving server 30 from the provisioning server 10. The transmitter/receiver 42 receives, from the provisioning server 10, a warning indicating that the plant equipment 40 is not registered yet.

### 3. Flow of Processing of Equipment Registration System 100

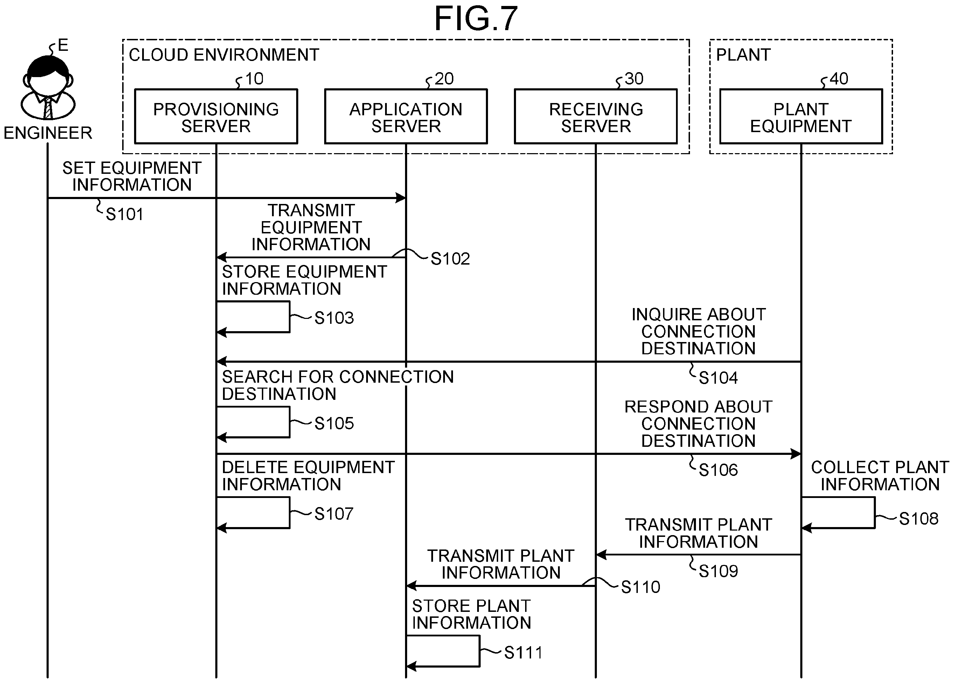

A flow of processing of the equipment registration system 100 according to a first embodiment will be described with reference to FIG. 7. FIG. 7 is a sequence diagram illustrating an example of a flow of equipment registration processing according to the embodiment. Note that processing of the following steps S101 to S111 can also be performed in a different order. Some of the processing of the following steps S101 to S111 may be omitted.

### 3-1. Equipment Information Setting Processing

The engineer E who is an administrator of the equipment registration system 100 sets equipment information in the application server 20 (step S101). For example, the engineer E sets identification information of the plant equipment 40, location information of the plant equipment 40, application information, and the like. At this point, the application server 20 sets transmission destination information based on the setting of the engineer E.

### 3-2. Equipment Information Registration Processing

The application server 20 transmits the equipment information and the transmission destination information to the provisioning server 10 (step S102). The provisioning server 10 stores the transmitted equipment information in the storage unit 12 (step S103). For example, the provisioning server 10 stores identification information of the plant equipment 40, location information of the plant equipment 40, and the like.

### 3-3. Connection Destination Inquiry Processing

The plant equipment 40 transmits, to the provisioning server 10, an inquiry about the receiving server 30 to which the plant equipment 40 is connected, based on the location information of the provisioning server 10 incorporated at the time of shipment (step S104). At this point, the plant equipment 40 transmits identification information of the plant equipment 40 to the provisioning server 10 together with the inquiry about the communication connection destination.

### 3-4. Connection Destination Response Processing

The provisioning server 10 searches for a connection destination of the plant equipment 40 based on the equipment information (step S105). Subsequently, if, based on the identification information acquired in step S105, the equipment information acquired from the application server 20 is registered and the plant equipment 40 is permitted, the provisioning server 10 transmits, to the plant equipment 40, the transmission destination information of the receiving server 30 which is a data transmission destination (step S106). On the other hand, if, based on the identification information acquired in step S105, the equipment information acquired from the application server 20 is not registered and the plant equipment 40 is not permitted, the provisioning server 10 transmits, to the plant equipment 40, a warning indicating that the plant equipment is not permitted.

### 3-5. Equipment Information Deletion Processing

The provisioning server 10 deletes the equipment information of the plant equipment 40 (step S107). For example, the provisioning server 10 deletes the equipment information of the plant equipment 40 to which the transmission destination information has been transmitted. The provisioning server 10 deletes the equipment information for which a predetermined period of time has elapsed since the acquisition of the equipment information.

### 3-6. Plant Information Collection Processing

The plant equipment 40 collects plant information (step S108). The plant equipment 40 transmits the plant information and the identification information to the receiving server 30 of the communication connection destination (step S109).

### 3-7. Plant Information Registration Processing

The receiving server 30 transmits the received plant information and identification information to the application server 20 (step S110). The application server 20 stores the transmitted plant information in the storage unit 22 (step S111), and the processing is ended.

### 4. Effects of Embodiment

Finally, effects of the embodiment will be described. In the following, effects 1 to 9 corresponding to the processing according to the embodiment will be described.

### 4-1. Effect 1

First, in the processing according to the above-described embodiment, the provisioning server 10 acquires identification information of a device associated with transmission destination information indicating a location of a destination to which data is transmitted from the device, receives an inquiry about transmission destination information from the device, and notifies the device, which is a request source of the inquiry, of the transmission destination information associated with the identification information of the device, which is the request source of the inquiry. Therefore, in the present processing, the communication setting of the device can be easily performed.

### 4-2. Effect 2

Second, in the processing according to the above-described embodiment, the provisioning server 10 receives an inquiry about the transmission destination information from a device in which the power is turned on and first activation is performed, and notifies the device at the time of first activation, of the transmission destination information. Therefore, in the present processing, the data transmission destination of the device is automatically set, whereby the communication setting of the device can be easily performed.

### 4-3. Effect 3

Third, in the processing according to the above-described embodiment, the provisioning server 10 acquires identification information regarding a device that is a request source of the inquiry and transmission destination information associated with the identification information, which are transmitted from the application server 20. Therefore, in the present processing, the data transmission destination is automatically set for each device corresponding to the application, whereby the communication setting of the device can be easily performed.

### 4-4. Effect 4

Fourth, in the processing according to the above-described embodiment, the provisioning server 10 inquires of the application server 20 and acquires the identification information regarding a device that is the request source of the inquiry and the transmission destination information associated with the identification information. Therefore, in the present processing, the data transmission destination is automatically inquired for each device corresponding to the application, whereby the communication setting of the device can be easily performed.

### 4-5. Effect 5

Fifth, in the processing according to the above-described embodiment, the provisioning server 10 receives the inquiry from a device in which the apparatus thereof is set as the request destination of the inquiry at the shipment stage of the device which is the request source of the inquiry. Therefore, in the present processing, since it is not necessary to perform individual settings for the identical device, the communication setting of the device can be easily performed.

### 4-6. Effect 6

Sixth, in the processing according to the above-described embodiment, the provisioning server 10 determines whether or not the identification information of a device that is the request source of the inquiry is registered in the identification information acquired from the application server 20, notifies the device of the transmission destination information if the identification information is registered, and outputs, to the device, information indicating that the identification information is not registered yet if the identification information is not registered. Therefore, in the present processing, the risk of information leakage or the like due to a setting error is reduced, and the communication setting of the device can be easily performed.

### 4-7. Effect 7

Seventh, in the processing according to the above-described embodiment, the provisioning server 10 holds the acquired identification information, and deletes, from among the held identification information, the identification information of a device for which the transmission destination information has been notified or the identification information for which a predetermined time has elapsed since the acquisition. Therefore, in the present processing, since the equipment information can be managed in a unitary manner even if the setting is changed, the communication setting of the device can be easily performed.

### 4-8. Effect 8

Eighth, in the processing according to the above-described embodiment, a device is plant equipment that transmits plant information acquired from a plant to a destination indicated by the notified transmission destination information. Therefore, in the present processing, the communication setting of the plant equipment can be easily performed.

### 4-9. Effect 9

Ninth, in the processing according to the above-described embodiment, the application server 20 notifies a device of an instruction to initialize the device by causing the device to delete the transmission destination information stored by the device. Therefore, in the present processing, the communication setting can be easily performed even when resetting of the device is necessary.

### System

The processing procedures, the control procedures, the specific names, and the information including various kinds of data and parameters illustrated in the above description and the drawings can be arbitrarily changed unless otherwise specified.

The components of the apparatuses illustrated in the drawings are functionally conceptual, and do not necessarily need to be physically configured as illustrated in the drawings. In other words, specific forms of distribution and integration of the apparatuses are not limited to those illustrated in the drawings. In other words, all or a part thereof may be configured to be functionally or physically distributed and integrated in arbitrary units according to various loads, use situations, or the like.

Further, all or an arbitrary part of the processing functions performed by the apparatuses may be implemented by a CPU and a program analyzed and executed by the CPU, or may be implemented as hardware by wired logic.

### Hardware

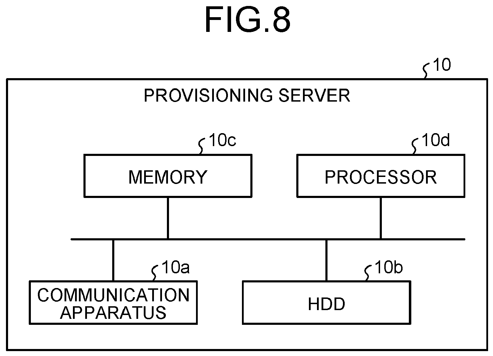

A hardware configuration example of the provisioning server 10 which is an information processing apparatus will now be described. Note that other apparatuses such as the application server 20 and the receiving server 30 may also have a similar hardware configuration. FIG. 8 is a diagram describing a hardware configuration example. As illustrated in FIG. 8, the provisioning server 10 includes a communication apparatus 10a, a hard disk drive (HDD) 10b, a memory 10c, and a processor 10d. The units illustrated in FIG. 8 are connected to each other via a bus or the like.

The communication apparatus 10a is a network interface card or the like, and communicates with other servers. The HDD 10b stores a program or a DB for operating the functions illustrated in FIG. 3.

The processor 10d reads out a program for executing processing similar to the processing units illustrated in FIG. 3 from the HDD 10b or the like and develops the program in the memory 10c, thereby operating a process for executing the functions described in FIG. 3 and the like. For example, this process executes functions similar to those of the processing units included in the provisioning server 10. Specifically, the processor 10d reads out, from the HDD 10b or the like, a program having functions similar to those of the acquisition unit 13a, the reception unit 13b, the notification unit 13c, the deletion unit 13d, and the like. The processor 10d executes a process that executes processing similar to those of the acquisition unit 13a, the reception unit 13b, the notification unit 13c, the deletion unit 13d, and the like.

As described above, the provisioning server 10 operates as an apparatus that executes various processing methods by reading out and executing programs. The provisioning server 10 may also implement the functions similar to those of the above-described embodiment by reading out the above-described program from a recording medium by a medium reading apparatus and executing the above-described read out program. Note that the program referred to in the other embodiments is not limited to being executed by the provisioning server 10. For example, the present invention may be similarly applied to a case where another computer or server executes the program or a case where the computer and the server execute the program in cooperation with each other.

This program may be distributed via a network such as the Internet. This program may be executed by being recorded in a computer-readable recording medium such as a hard disk, a flexible disk (FD), a CD-ROM, a magneto-optical (MO) disk, or a digital versatile disc (DVD), and being read out from the recording medium by the computer.

The present invention has an effect that communication setting of a device can be easily performed.

## Claims

1. An information providing apparatus (10) comprising:
an acquisition unit (13a) configured to acquire identification information of a device (40) associated with transmission destination information indicating a location of a destination to which data is transmitted from the device;
a reception unit (13b) configured to receive an inquiry about the transmission destination information from the device (40); and
a notification unit (13c) configured to notify the device (40), which is a request source of the inquiry, of the transmission destination information associated with the identification information of the device (40), which is the request source of the inquiry.

2. The information providing apparatus (10) according to claim 1, wherein
the reception unit (13b) receives an inquiry about the transmission destination information from the device (40) in which a power is turned on and first activation is performed, and
the notification unit (13c) notifies the device (40) at a time of first activation, of the transmission destination information.

3. The information providing apparatus (10) according to claim 1, wherein
the acquisition unit (13a) acquires the identification information regarding a device (40) that is a request source of the inquiry and the transmission destination information associated with the identification information, the identification information and the transmission destination information being transmitted from an information management apparatus (20).

4. The information providing apparatus (10) according to claim 1, wherein
the acquisition unit (13a) inquires of an information management apparatus (20) and acquires the identification information regarding a device (40) that is a request source of the inquiry and the transmission destination information associated with the identification information.

5. The information providing apparatus (10) according to any one of claims 1 to 4, wherein
the reception unit (13b) receives the inquiry from the device (40) in which an apparatus in which the reception unit (13b) is included is set as a request destination of the inquiry at a shipment stage of the device (40) which is a request source of the inquiry.

6. The information providing apparatus (10) according to claim 3, wherein
the notification unit (13c) determines whether or not identification information of the device (40) that is a request source of the inquiry is registered in the identification information acquired from the information management apparatus (20), and
the notification unit (13c) notifies the device (40) of the transmission destination information if the identification information is registered, and outputs, to the device (40), information indicating that the identification information is not registered yet if the identification information is not registered.

7. The information providing apparatus (10) according to claim 1, further including:
a storage unit (12) configured to store the identification information acquired by the acquisition unit (13a); and
a deletion unit (13d) configured to delete, from among the identification information stored in the storage unit (12), the identification information of the device (40) for which the transmission destination information has been notified or the identification information for which a predetermined time has elapsed since the acquisition by the acquisition unit (13a).

8. The information providing apparatus (10) according to claim 1, wherein
the device (40) is plant equipment that transmits plant information acquired from a plant to a destination indicated by the notified transmission destination information.

9. An information providing program causing a computer (10) to execute a process, the process comprising:
acquiring identification information of a device (40) associated with transmission destination information indicating a location of a destination to which data is transmitted from the device (40);
receiving an inquiry about the transmission destination information from the device (40); and
notifying the device (40), which is a request source of the inquiry, of the transmission destination information associated with the identification information of the device (40), which is the request source of the inquiry.

10. An equipment registration system (100) comprising: an information management apparatus (20) configured to execute designated processing on data received from a device (40); and an information providing apparatus (10), wherein
the information management apparatus (20) includes
a transmitter (23b) configured to transmit, to the information providing apparatus (10), transmission destination information indicating a transmission destination of the data and identification information of the device (40) associated with the transmission destination information, and
the information providing apparatus (10) includes:
an acquisition unit (13a) configured to acquire the transmission destination information and the identification information from the information management apparatus (20);
a reception unit (13b) configured to receive an inquiry about the transmission destination information from the device (40); and
a notification unit (13c) configured to notify the device (40), which is a request source of the inquiry, of the transmission destination information associated with the identification information of the device (40), which is the request source of the inquiry.

11. The equipment registration system (100) according to claim 10, wherein
the information management apparatus (20) notifies the device (40) of an instruction to initialize the device (40) by causing the device (40) to delete the transmission destination information stored by the device (40).

12. An equipment registration method executed by an equipment registration system (100) including an information management apparatus (20) configured to execute designated processing on data received from a device (40) and an information providing apparatus (10), the equipment registration method comprising:
by the information management apparatus (20), executing processing of transmitting, to the information providing apparatus (10), transmission destination information indicating a transmission destination of the data and identification information of the device (40) associated with the transmission destination information; and
by the information providing apparatus (10), executing processing of:
acquiring the identification information from the information management apparatus (20);
receiving an inquiry about the transmission destination information from the device (40); and
notifying the device (40), which is a request source of the inquiry, of the transmission destination information associated with the identification information of the device (40), which is the request source of the inquiry.
